# EUROPÄISCHE PATENTSCHRIFT

(11) **EP 2 099 668 B1**
(45) Veröffentlichungstag und Bekanntmachung des Hinweises auf die Patenterteilung: **10.10.2012**
(21) Anmeldenummer: 07855995.2
(22) Anmeldetag: 25.10.2007
(51) Int. Cl.: B62B 3/14, B62B 5/04, B60B 33/02

(54) **WEGFAHRSPERRE**
IMMOBILIZER
DISPOSITIF D'IMMOBILISATION

(30) Priorität: 26.10.2006 DE 202006016576 U
(43) Veröffentlichungstag der Anmeldung: 16.09.2009
(73) Patentinhaber: Wieth, Franz, 82178 Puchheim (DE); Sonnendorfer, Horst, 82178 Puchheim (DE)
(72) Erfinder: Wieth, Franz, 82178 Puchheim (DE); Sonnendorfer, Horst, 82178 Puchheim (DE)
(74) Vertreter: Braun-Dullaeus, Karl-Ulrich
(86) Internationale Anmeldenummer: PCT/DE2007/001910
(87) Internationale Veröffentlichungsnummer: WO 2008/049417

(56) Entgegenhaltungen:
- EP-A- 0 413 197
- WO-A-2005/028278
- DE-A1- 4 128 729
- US-A- 1 895 150

## Beschreibung

### Technisches Gebiet

Die Erfindung betrifft eine Wegfahrsperre für Einkaufswagen

### Stand der Technik

Aus dem Stand der Technik ist eine Vielzahl von Wegfahrsperre bekannt, durch welche verhindert werden soll, dass ein Transportwagen ausserhalb eines zulässigen Bereichs verwendet werden kann.

Eine der bekannten Wegfahrsperren ist in der WO2005 028278 beschrieben. Dort wird der Lenkwinkel der Transportrollen des Transportwagens nach dem Aktivieren der Wegfahrsperre mit Hilfe einer mechanischen Vorrichtung in unterschiedlichen Winkelstellungen blockiert.

Die dort beschriebene mechanische Vorrichtung umfasst eine ratschenartige Einheit, welche eine Änderung des Lenkwinkels nur in einer Drehrichtung erlaubt und so verhindert, dass der Lenkwinkel, sobald er sich einmal geändert hat wieder zurück in die für eine Geradeausfahrt nötige Stellung kommen kann.

Bei dieser bekannten Vorrichtung erfolgt die Änderung der Lenkwinkel unter Ausnutzung der Tatsache, dass beim Kurvenfahren die Lenkwinkel ständig einen neuen Wert einnehmen.

Versucht der Benutzer des Einkaufswagens mit aktivierter Wegfahrsperre den Einkaufswagen zu manövrieren, so bewirkt jede Kurvenfahrt, dass sich der Lenkwinkel ändert, aber anschließend nicht wieder zurück in die für eine Geradeausfahrt nötige Stellung kommen kann.

Nachteilig bei der bekannten Lösung ist nun, dass der Kunde mit dem Einkaufswagen noch eine gewisse Strecke fahren kann, sofern er nicht eine Kurve fährt. Der Einkaufswagen kann so je nach örtlichen Gegebenheiten noch eine gewisse Strecke benutzt werden, bevor die Lenkwinkel der einzelnen Transportrollen in unterschiedlichen Winkeln blockiert sind.

Aus dem US 1 895 150 A ist ein gattungsgemäßer Bremsmechanismus für eine Transportrolle bekannt. Bei gelöster Bremse weist die Transportrolle einen Nachlauf auf. Zum Betätigen der Bremse wird die Lenkachse der Transportrolle durch manuelle Betätigung verschoben. Die Lenkrolle wird hierdurch gegen die Gabel gedrückt und an einer weitem Rotation gehindert.

### Offenbarung der Erfindung

### Technische Aufgabe

Es ist Aufgabe der Erfindung, eine Wegfahrsperre zu schaffen, bei welcher die Schrägstellung der Lenkwinkel nach dem Aktivieren unabhängig von den Lenkbewegungen des Benutzers schnell eintritt.

### Technische Lösung

Die Überlegungen die zur Entstehung der vorliegenden Erfindung führten machten sich die Erkenntnis zu eigen, dass eine Lenkrolle nur aufgrund eines so genannten Nachlaufes eine definierte Stellung beim Schieben einnimmt.

Unter Nachlauf versteht man den Abstand der Aufstandsfläche zur Drehachse der Transportrolle. Dieser Nachlauf sorgt dafür, dass der an der Aufstandsfläche auftretende Rollwiderstand ein Moment um die Lenkachse auftritt, welches die Transportrolle so ausrichtet, dass zielgenaues Schieben des Einkaufswagens möglich ist.

Bei einer Transportrolle, die keinen Nachlauf aufweist, d.h. dass die Lenkachse im wesentlichen durch die Aufstandsfläche der Transportrolle verläuft entsteht beim Schieben des EKW kein solches Moment, welches die Transportrolle dann ausrichtet.

Ein kleiner Widerstand, etwa eine Unebenheit in der Fahrbahn, welche beim Schieben des EKW im Bereich der Aufstandsfläche auftritt erzeugt ein stochastisch auftretendes Moment um die Lenkachse.

Dieses Moment bewegt die Transportrolle in einen von der Schiebrichtung abweichenden Lenkwinkel, der seinerseits wieder einen stochastischen Wert hat.

### Vorteilhafte Wirkungen

Dies bewirkt vorteilhaft, dass bei der aktivierten Wegfahrsperre jedes Rad in einer anderen Richtung steht und so ein Schieben äußerst schwer möglich ist und insbesondere keine gerade Strecke zurückgelegt werden kann.

### Kurze Beschreibung der Zeichnungen

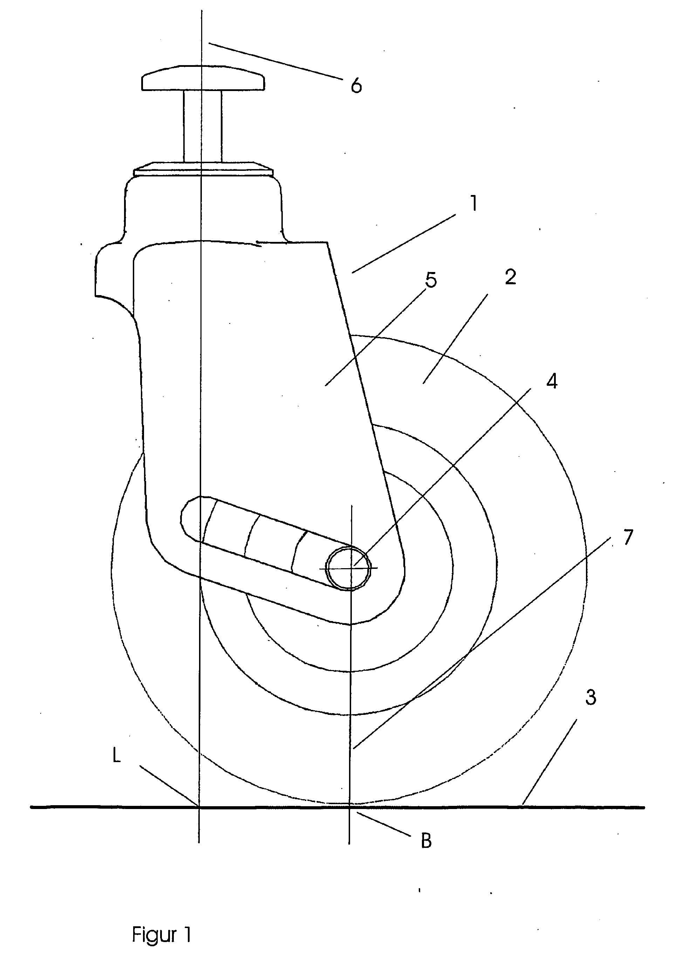

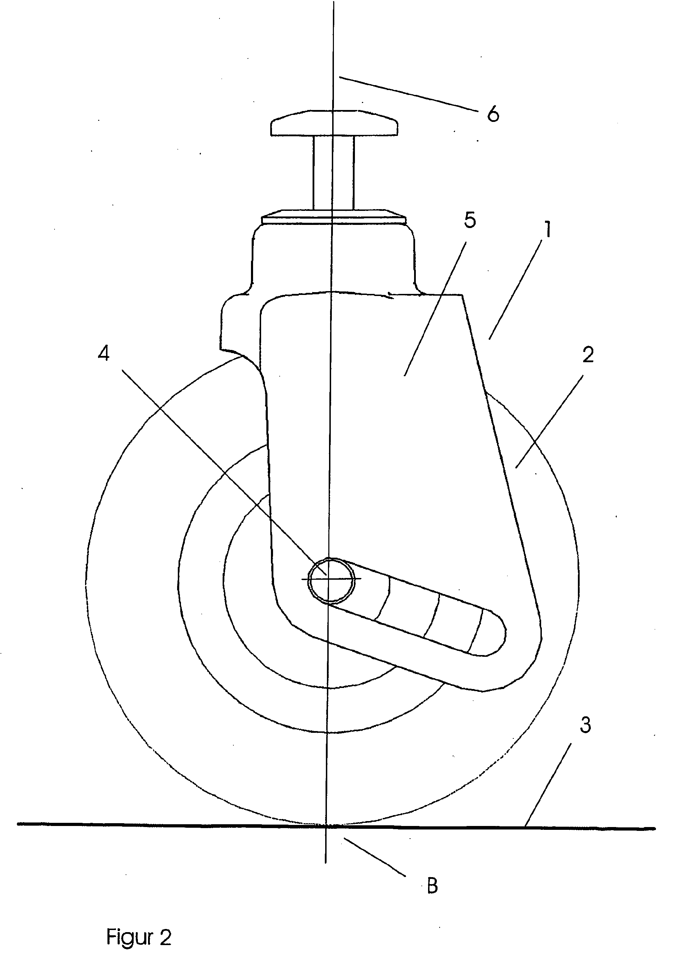

Die Figur 1 zeigt eine Transportrolle im Normalzustand, die Figur 2 zeigt die Transportrolle bei aktivierter Wegfahrsperre.

Die Transportrolle 1 besteht aus einem Rad 2, welches auf der Fahrbahn 3 fährt. Das Rad 2 ist über eine Radwelle 4 in einem Lenkschenkel 5 gelagert. Der Lenkschenkel 5 ist um eine Drehachse 6 drehbar. Das Rad steht im wesentlichen mit dem Bereich B der Fahrbahrbahn im Kontakt, der sich in der Nähe des Ortes befindet, an welchem das Lot 7 vom Mittelpunkt der Radwelle 4 die Fahrbahnebene durchdringt.

Die Drehachse 6 durchdringt die Fahrbahn 3 am Ort L, der außerhalb des Bereiches B liegt. Die beim Schieben des Einkaufswagens zwischen Fahrbahn 3 und Rad 2 auftretende Kraft erzeugt nun ein Moment um die Drehachse 6, welches dazu führt, dass sich das Rad parallel zur Schieberichtung ausrichten kann und beim Lenken des Einkaufswagens den Lenkbewegungen folgen kann.

Die Figur 2 zeigt die Transportrolle bei aktivierter Wegfahrsperre. Die Wegfahrsperre wurde durch einen hier nicht näher gezeigten Mechanismus aktiviert. Die Mittelachse der Welle 4 und die Lenkachse 6 schneiden sich bzw. haben nur einen sehr geringen Abstand zueinander, der auch Fertigungstoleranzen zurückzuführen ist.

Die Lenkachse 6 durchdringt nun die Fahrbahn in dem Bereich B, in welchem das Rad 2 die Fahrbahn berührt.

Beim Schieben tritt nun in erfinderischer Weise kein Moment auf, welches zu einem Ausrichten des Rades 2 in Fahrtrichtung bzw. in Lenkrichtung führen würde.

Nun tritt aber noch ein anderer Effekt auf, der daher rührt, dass das Rad 2 die Fahrbahn im Bereich einer Fläche berührt und die Lenkachse 6 diese Fläche in einem Punkt durchstößt.

Sobald eine kleine Unebenheit auf der Fahrbahn 3 vorhanden ist und das Rad hieran anstößt führt dies zu einer zufälligen Drehung des Rades um die Lenkachse. Die Richtung und der Betrag dieser Drehung ist nur davon abhängig, wie weit die Unebenheit von dem Punkt entfernt ist, an welchem die Lenkachse 6 Fahrbahn 3 durchstößt.

### Gewerbliche Anwendbarkeit

Die Erfindung ist gewerblich anwendbar beispielsweise bei Einkaufswagen, die vom Betreiber eines Supermarktes auf Pfandbasis zur Verfügung gestellt werden und bei denen verhindert werden soll, dass die Einkaufswagen außerhalb des Betriebsgeländes verwendet werden.

## Patentansprüche

1. Transportwagen mit Wegfahrsperre, wobei
- die Wegfahrsperre eine Transportrolle aufweist, die mit einer Aufstandsfläche die Fahrbahn berührt, und
- die Transportrolle im deaktivierten Zustand der Wegfahrsperre einen Nachlauf aufweist, der sich daraus ergibt, dass zwischen dem Ort an welchem die Lenkachse die Fahrbahn schneidet und der Aufstandsfläche der Transportrolle auf der Fahrbahn ein Abstand vorhanden ist,
**dadurch gekennzeichnet, dass**
bei aktivierter Wegfahrsperre die geometrischen Verhältnisse zwischen dem Ort (L) an welchem die Lenkachse (6) die Fahrbahn schneidet und der Aufstandsfläche (B) so verändert sind, dass der Ort (L) an welchem die Lenkachse (6) die Fahrbahn schneidet im wesentlichen in der Aufstandsfläche (B) der Transportrolle verläuft, so dass beim Schieben des Transportwagens die Transportrolle beim Überfahren einer Unebenheit der Fahrbahn (3) ihren Lenkwinkel ändert.

## Claims

1. A shopping trolley with an immobiliser, wherein
- the immobiliser comprises a transport roller contacting the ground with a contact surface, and
- the transport roller, when the immobiliser is deactivated, continues to roll which results from the fact that a gap exists between the place at which the steering axis intersects with the ground and the contact surface of the transport roller on the ground,
**characterised in that**
when the immobiliser is activated the geometric relationship between the location (L), at which the steering axis (6) intersects with the ground, and the contact surface (B) are altered such that the location (L), at which the steering axis (6) intersects with the ground, extends essentially within the contact surface (B) of the transport roller, so that when the shopping trolley is being pushed the transport roller changes its steering angle when rolling over an unevenness in the ground (3).

## Revendications

1. Véhicule de transport avec système anti-démarrage, dans lequel
- le système anti-démarrage comporte un rouleau de transport touchant la chaussée avec une surface d'appui, et
- dans l'état désactivé du système anti-démarrage, le rouleau de transport présente une chasse provoquée par un espacement entre l'endroit où l'essieu directeur coupe la chaussée et la surface d'appui du rouleau de transport sur la chaussée,
**caractérisé en ce que**
lorsque le système anti-démarrage est activé, les rapports géométriques entre l'endroit (L) où l'essieu directeur (6) coupe la chaussée et la surface d'appui (B) sont modifiés de telle sorte, que l'endroit (L) où l'essieu directeur (6) coupe la chaussée s'étend essentiellement dans la surface d'appui (B) du rouleau de transport, de manière à ce que lorsque le véhicule de transport est poussé, le rouleau de transport modifie son angle de direction lors du passage sur une aspérité de la chaussée (3).
